# EUROPÄISCHE PATENTSCHRIFT

(11) **EP 0 837 230 B1**
(45) Veröffentlichungstag und Bekanntmachung des Hinweises auf die Patenterteilung: **19.12.2001**
(21) Anmeldenummer: 97116600.4
(22) Anmeldetag: 24.09.1997
(51) Int. Cl.: F01N 7/08, F01N 7/14

(54) **Abgasrohr**
Exhaust conduit
Tuyau d'échappement

(30) Priorität: 16.10.1996 DE 19642692
(43) Veröffentlichungstag der Anmeldung: 22.04.1998
(73) Patentinhaber: DaimlerChrysler AG, 70567 Stuttgart (DE)
(72) Erfinder: Brutschy, Rainer, 73249 Wernau (DE); Schmidt, Erwin, 73666 Baltmannsweiler (DE)

(56) Entgegenhaltungen:
- EP-A- 0 789 137
- DE-A- 4 224 499
- DE-U- 9 205 294
- US-A- 5 331 810
- PATENT ABSTRACTS OF JAPAN vol. 095, no. 003, 28. April 1995 & JP 06 336921 A (SANGO CO LTD), 6. Dezember 1994
- PATENT ABSTRACTS OF JAPAN vol. 095, no. 010, 30. November 1995 & JP 07 174020 A (CALSONIC CORP), 11. Juli 1995

## Beschreibung

Die Erfindung bezieht sich auf ein Abgasrohr gemäß dem Oberbegriff des Patentanspruchs 1, welches als luftspaltisoliertes doppelwandiges Rohr mit einem Außenrohr und einem mit Abstand zum Außenrohr verlaufenden Innenrohr ausgebildet ist.

Die Anforderungen an die heutigen Brennkraftmaschinen werden im Hinblick auf Verbrauch, Fahrverhalten, Geräusch und Wärmeentwicklung immer größer. Hierbei wird über die Abgasführung direkt Einfluß auf die oben genannten Parameter genommen. Luftspaltisolierte Abgasrohre bewirken eine Verringerung der Wärmeabgabe des Abgases an die Umgebung, so daß genügend Abgasenergie für den Betrieb eines im Anschluß an das Abgasrohr angeschlossenen Abgasturboladers vorhanden ist und gleichzeitig eine Beschädigung von im Motorinnenraum angeordneten, temperaturempfindlichen Bauteilen vemieden wird. Über Kompensatoren des Abgasrohres werden die im Betrieb der Brennkraftmaschine auftretenden Wärmespannungen im Abgasrohr ausgeglichen.

Aus der DE 34 36 982 C2 ist ein gattungsgemäßes Abgasrohr für eine Verbrennungskraftmaschine bekannt. Das Abgasrohr besteht aus einem zentralen Gasführungsrohr, das mit Abstand von einem Hüllrohr umgeben ist. Das Abgasrohr ist mittels Schweißen oder Schrauben über das Gasführungsrohr bzw. über das Gasführungsrohr sowie das Hüllrohr mit Flanschen verbunden, über die wiederum das Abgasrohr mit weiterführenden Bauteilen verbunden werden kann.

Aus der US 5 331 810 ist ein Abgasrohr bekannt, das als luftspaltisoliertes doppelwandiges Rohr mit einem Außenrohr und einem mit Abstand zum Außenrohr verlaufenden Innenrohr ausgebildet ist, wobei das Außenrohr aus mehreren, fest miteinander verbundenen Teilen besteht. Das Innenrohr weist einen Kompensator auf. In den Verlauf des Außenrohres ist ein weiterer Kompensator integriert. Die US 5 331 810 zeigt ein weiteres Abgasrohr, das an seinem stromaufseitigen und an seinem stromabseitigen Ende Stutzen aufweist, an denen das Innenrohr anliegt.

Aus der DE 42 02 079 A1 ist eine Abgasanlage für Brennkraftmaschinen bekannt, mit einer luftspaltisolierten Abgasleitung, die an angrenzende Bauteile der Abgasanlage anschließt. Die Abgasleitung seitzt sich zusammen aus einem Innenrohr und einem Außenrohr, die durch einen umlaufenden Luftspalt gegeneinander isoliert sind. Das tragende Außenrohr ist an seinem stromaufseitigen Ende mit einem Flansch zum Anschluß an einen Abgaskrümmer verschweißt und weist an seinem stromabseitigen Ende glockenförmige, eine Durchmessererweiterung bildende Manschetten auf, die wiederum mit dem Außenrohr und mit einem Gehäuse eines Katalysators verschweißt sind.

Ein Nachteil der oben erwähnten Abgasrohre liegt in der aufwendigen Montage der Abgasrohre an weiterführende Bauteile.

Der Erfindung liegt die Aufgabe zugrunde, ein Abgasrohr zu schaffen, welches einfach und kostengünstig herstellbar ist, sowie eine zeit- und kostensparende Montage ermöglicht.

Diese Aufgabe wird erfindungsgemäß durch die im Kennzeichen des Patentanspruchs 1 gegebenen Merkmale gelöst.

Vorteilhafterweise sind am stromaufseitigen und am stromabseitigen Ende des Abgasrohres tulpenartige Aufweitungen vorgesehen, die durch das Außenrohr, durch das Außen- sowie das Innenrohr und/oder durch das Außenrohr und die Verstärkungshülse gebildet sind. Die nach außen gewölbten tulpenartigen Aufweitungen des Abgasrohres wirken mit den nach außen gewölbten Innenkonturen der Flanschringe zusammen. Durch die tulpenartigen Aufweitungen wird erreicht, daß eine zusätzliche Anbindung des Abgasrohres mittels Schweißen oder Schrauben an die Flanschringe entfallen kann. Die Anbindung des Abgasrohres an die Flanschringe erfolgt gleichzeitig bei der Montage des Abgasrohres an weiterführende Bauteile, wobei sich die Flanschringe bei der Montage einfach zentrieren lassen und nach der Montage das Außenrohr bzw. das Außenrohr- sowie das Innenrohr verklemmen. Zusätzlich erfüllen die tulpenartigen Aufweitungen in Verbindung mit den Flanschringen auch noch eine Dichtfunktion, da durch das Verklemmen im Bereich der Aufweitungen eine zufriedenstellende Abdichtung zwischen Innen- und Außenrohr am stromaufseitigen Ende des Abgasrohres ermöglicht ist.

Die Verstärkungshülse des Außenrohres kann vorteilhafterweise eine gleitfähige Anlagefläche für den Schiebesitz des Innenrohres ausbilden, wofür ein entsprechender Werkstoff mit Gleit- und Verstärkungseigenschaften ausgewählt werden kann.

Durch die Integration des Kompensators in das Außenrohr kann ein nachträglich eingebauter Kompensator nebst Verbindungslementen entfallen, wodurch nicht nur die Herstellung sondern auch die anschließende Montage des Abgasrohres erheblich vereinfacht wird. Da das Innenrohr nur im Bereich der verjüngten Stutzen an dem Außenrohr anliegt, kann nur in diesem Bereich eine Wärmeübertragung vom heißen Innenrohr an das Außenrohr stattfinden und die Isolierwirkung des Abgasrohres wird nur unwesentlich nachteilig beeinflußt.

Weitere Ausgestaltungen und Vorteile der Erfindung gehen aus dem übrigen Unteranspruch und der Beschreibung hervor.

In den Zeichnungen ist die Erfindung anhand von zwei Ausführungsbeispielen erläutert, und zwar zeigen:
- Fig. 1: in einem ersten Ausführungsbeispiel eine Draufsicht eines erfindungsgemäßen Abgasrohres und ein Ende des Abgasrohres in einem Teilschnitt, wobei das Abgasrohr ein Innenrohr sowie ein Außenrohr umfaßt und an seinem stromaufseitigen sowie seinem stromabseitigen Ende Flanschringe zur Verbindung des Abgasrohres mit einem weiterführenden Bauteil aufweist,
- Fig. 2: einen Teilschnitt durch das stromaufseitige Ende des Abgasrohres gemäß Fig. 1 und
- Fig. 3: in einem zweiten Ausführungsbeispiel einen Teilschnitt durch das stromabseitige Ende des Abgasrohres.

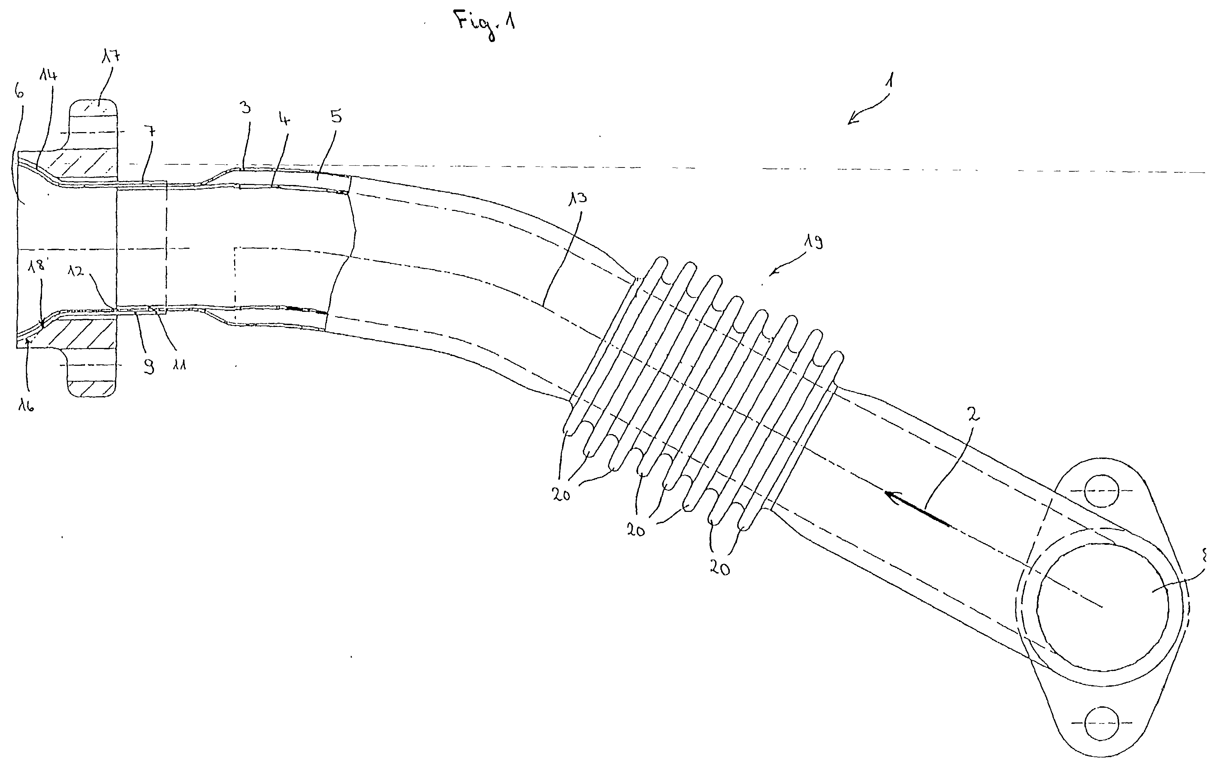

Fig. 1 stellt ein doppelwandiges Abgasrohr 1 dar, wie es beispielsweise in einem Kraftfahrzeug zwischen Brennkraftmaschine und Abgasturbolader Verwendung finden kann. Das in Richtung des Pfeiles 2 durchströmte Abgasrohr 1 umfaßt ein einstückiges Außenrohr 3 und ein mit Abstand zu diesem verlaufendes, gasführendes Innenrohr 4, wodurch ein ringförmiger, luftgefüllter Hohlraum 5 zwischen den Rohren 3, 4 ausgebildet ist, welcher sowohl zur Schallisolierung als auch zur Wärmeisolierung dient. Am stromabseitigen Ende 6 des Abgasrohres 1 ist eine Verstärkungshülse 7 außerhalb des Außenrohres 3 angeordnet.

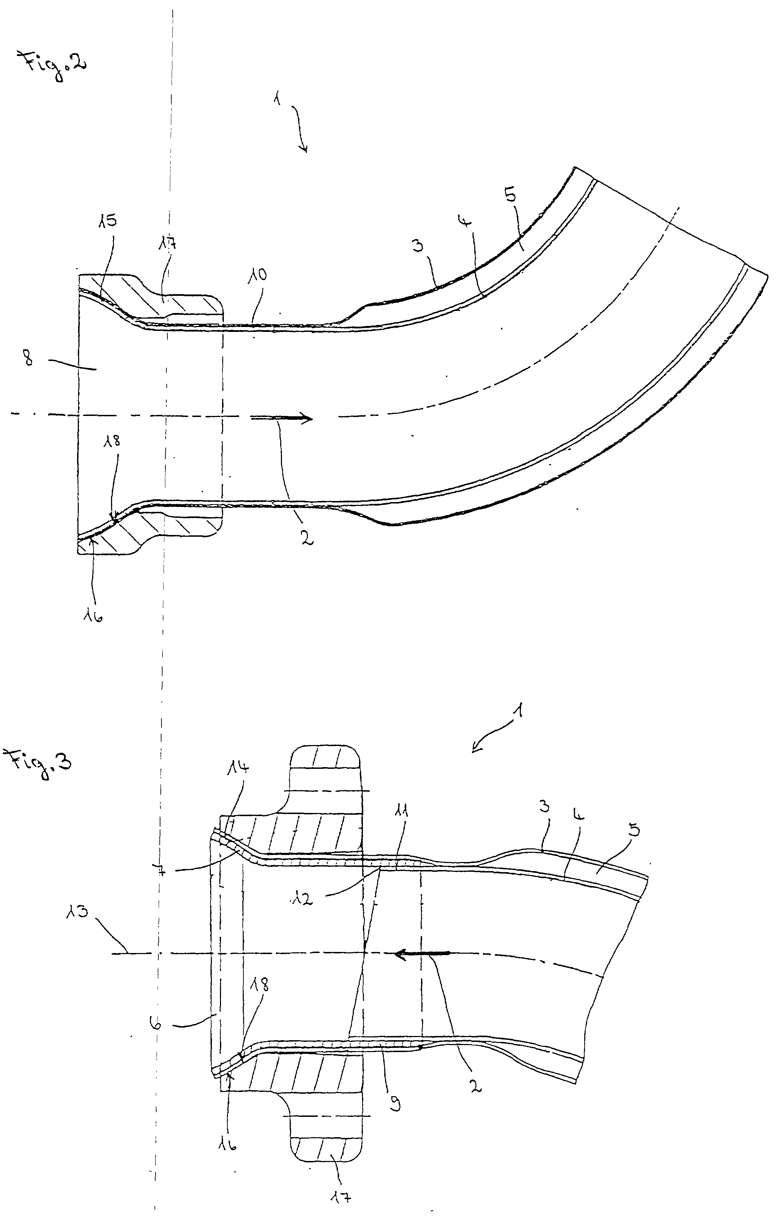

Das Abgasrohr 1 weist an seinem stromaufseitigen Ende 8 und seinem stromabseitigen Ende 6 von dem Außenrohr 3 gebildete verjüngte Stutzen 9 und 10 auf (siehe Fig. 2 und 3), an denen das Innenrohr 4 anliegt.

Am stromaufseitigen Ende 8 des Abgasrohres 1 schließen das Innenrohr 4 und das Außenrohr 3 bündig miteinander ab, wobei das Innenrohr 4 und das Außenrohr 3 eine spielfreie Verbindung aufweisen (siehe Fig. 2).

Am stromabseitigen Ende 6 des Abgasrohres 1 steht das Außenrohr 3 gegenüber dem Innenrohr 4 über. An diesem stromabseitigen Ende 6 weist das Innenrohr 4 einen Kompensator 11 auf, der als Schiebesitz relativ zum Außenrohr 3 des Abgasrohres 1 ausgebildet ist, so daß ein Ausgleich der unterschiedlichen Wärmedehnungen des wärmeren, gasführenden Innenrohres 4 gegenüber dem weniger warmen Außenrohr 3 möglich ist. Das Innenrohr 4 liegt an der Innenseite des Außenrohres 3 im Bereich des Stutzens 9 an. Die Anlagekräfte sind so gering, daß eine Relativbewegung in Längsrichtung 13 zwischen dem Innenrohr 4 und dem Außenrohr 3 möglich ist.

Ein Spalt 12 zwischen Innenrohr 4 und Außenrohr 3 im Bereich des Schiebesitzes 11 des Innenrohres 4 ist im Betriebszustand der Brennkraftmaschine im wesentlichen gasdicht, wodurch verhindert wird, daß heißes Abgas aus dem Innenrohr 4 in den ringförmigen Hohlraum 5 zwischen Innenrohr 4 und Außenrohr 3 gelangt und dadurch das Außenrohr 3 aufheizt.

Das Abgasrohr 1 weist im Bereich der Stutzen 9, 10 an seinen Enden 6, 8 tulpenartige Aufweitungen 14, 15 auf (siehe Fig. 2 und 3), die am stromaufseitigen Ende 8 durch das Außenrohr 3 sowie das Innenrohr 4 und am stromabseitigen Ende 6 durch das Außenrohr 3 und die Verstärkungshülse 7 gebildet sind. Die tulpenartigen Aufweitungen 14, 15 weisen eine konvexe kugelige Außenfläche 16 auf und können über einen das Innenrohr 4 und das Außenrohr 3 bzw. das Außenrohr 3 und die Verstärkungshülse 7 verklemmenden Flanschring 17 mit einem weiterführenden Bauteil, wie beispielsweise einem Abgasturbolader, verbunden werden.

Der Flanschring 17 ist mit einer konkaven Innenfläche 18 versehen, wobei die Innenfläche 18 zu dem Ende 6, 8 des Abgasrohres 1 hinweist und die konvexe Außenfläche 16 der Aufweitung 14, 15 umschließt. Die Flächen 16, 18 zentrieren damit den Flanschring 17 und das Abgasrohr 1 zueinander, wobei diese sich um den Mittelpunkt der die Flächen 16, 18 bildenden Kugel verschwenken und somit eine dichte Anlage bilden können. Der Flanschring 17 ist über hier nicht dargestellte Schrauben mit dem weiterführenden Bauteil verbindbar, wodurch die spielfreie Verbindung zwischen Innenrohr 4 und Außenrohr 3 bzw. Außenrohr 3 und Verstärkungshülse 7 verklemmt wird.

Erfindungsgemäß ist mindestens ein weiterer Kompensator 19 des Abgasrohres 1 in den Verlauf des einstückigen Außenrohres 3 integriert, wobei das Abgasrohr 1 beispielsweise durch das dem Fachmann bekannte Innen-Hochdruck-Umformverfahren (IHV) herstellbar ist. Der Kompensator 19 besteht aus Falten 20 unterschiedlicher Festigkeit, die eine thermische Längenänderung des Außenrohres 3 in Längsrichtung 13 während des Betriebes der Brennkraftmaschine ausgleichen, so daß Spannungen, die das Abgasrohr 1 zerstören könnten, nicht auftreten können. Die Anzahl der Kompensationsfalten 20 ist abhängig von den auftretenden Wärmespannungen. Denkbar sind auch weitere Kompensatoren im Verlauf des Außenrohres 3.

Fig. 3 zeigt ein weiteres Ausführungsbeispiel des Abgasrohres 1, bei dem die Verstärkungshülse 7 am stromabseitigen Ende 6 des Abgasrohres 1 zwischen Innenrohr 4 und Außenrohr 3 angeordnet ist und dadurch eine Gleitfläche für den Schiebesitz 11 des Innenrohres 4 bildet.

Das Innenrohr 4 wird an beiden Enden 6, 8 des Abgasrohres 1 durch die Stutzen 9, 10 des Außenrohres 3 geführt. Die Wandstärke des Innenrohres 4 kann deshalb wesentlich dünner gewählt werden, als die des tragenden Außenrohres 3. Je nach Wandstärke des Außenrohres 3 kann auf die Verstärkungshülse 7 am stromabseitigen Ende 6 des Abgasrohres 1 verzichtet werden. Ferner läßt sich die isolierende Wirkung des erfindungsgemäßen Abgasrohres 1 weiter verbessern, indem der Hohlraum 5 zwischen dem Außenrohr 3 und dem Innenrohr 4 mit einem isolierenden Material ausgefüllt werden kann. Desweiteren kann das Innenrohr 4 auch aus einem wärmefesteren Material als das Außenrohr 3 bestehen, da die Maximaltemperatur im Innenrohr 4 erreicht wird. Selbst der Kontakt des Außenrohres 3 mit dem Innenrohr 4 im Bereich der Stutzen 9, 10 verursacht keine derart hohen Temperaturen am Außenrohr 3, so daß ein niedertemperaturbeständiger Werkstoff ausreicht. Ferner können die Stutzen 9, 10 des Abgasrohres 1 auch durch eine Aufweitung des Innenrohres 4 dargestellt werden, wodurch das Innenrohr 4 am gleichbleibenden Außenrohr 3 anliegt.

## Patentansprüche

1. Abgasrohr (1), das als luftspaltisoliertes doppelwandiges Rohr mit einem einstückigen Außenrohr (3) und einem mit Abstand zum Außenrohr verlaufenden Innenrohr (4) ausgebildet ist, wobei das Abgasrohr (1) an seinem stromaufseitigen Ende (8) und seinem stromabseitigen Ende (6) Stutzen (9, 10) aufweist, an denen das Innenrohr (4) anliegt, das mindestens einen Kompensator (11) aufweist, der relativ zum Außenrohr (3) am stromabseitigen Ende (6) des Abgasrohres (1) ausgebildet ist, welches an seinem stromaufseitigen Ende (8) eine spielfreie Verbindung zwischen Innenrohr (4) und Außenrohr (3) aufweist und wobei mindestens ein weiterer Kompensator (19) in den Verlauf des Außenrohres (3) integriert ist,
**dadurch gekennzeichnet,**
**daß** das Abgasrohr (1) an seinem stromaufseitigen Ende (8) eine durch das Außenrohr (3) und das Innenrohr (4) gebildete tulpenartige Aufweitung (15) aufweist, die über einen das Innenrohr (4) und das Außenrohr (3) verklemmenden Flanschring (17) mit einem weiterführenden Bauteil verbunden werden kann und daß das Abgasrohr (1) an seinem stromabseitigen Ende (6) eine durch das Außenrohr (3) gebildete tulpenartige Aufweitung aufweist, die über einen das Außenrohr (3) verklemmenden Flanschring (17) mit einem weiterführenden Bauteil verbunden werden kann.

2. Abgasrohr nach Anspruch 1,
**dadurch gekennzeichnet,**
**daß** das Abgasrohr (1) an seinem stromabseitigen Ende (6) eine Verstärkungshülse (7) aufweist, die außerhalb des Außenrohres (3) oder zwischen Innenrohr (4) und Außenrohr (3) angeordnet ist und zusammen mit dem Außenrohr (3) eine tulpenartige Aufweitung (14) ausbildet, die über einen die Verstärkungshülse (7) und das Außenrohr (3) verklemmenden Flanschring (17) mit einem weiterführenden Bauteil verbunden werden kann.

3. Abgasrohr nach Anspruch 1,
**dadurch gekennzeichnet,**
**daß** das Außenrohr (3) in einem als Kompensator (19) ausgebildeten Bereich mit Falten (20) unterschiedlicher Festigkeit ausgestattet ist.

## Claims

1. Exhaust gas pipe (1), designed as a double-walled pipe insulated by an air gap, having an integral outer pipe (3) and, extending at a distance apart from the outer pipe, an inner pipe (4), the exhaust gas pipe (1) having connection pieces (9, 10) at its upstream end (8) and its downstream end (6), against which lies the inner pipe (4), which has at least one compensator (11) at the downstream end (6) relative to the exhaust gas pipe (1), the upstream end (8) of which has a clearance-free connection between inner pipe (4) and outer pipe (3), and at least one additional compensator (19) being integrated in the run of outer pipe (3),
**characterised in that**
at its upstream end (8), the exhaust gas pipe (1) has a tulip-shaped flared region (15) formed by the outer pipe (3) and the inner pipe (4), which can be joined by means of a flanged ring (17) clamping the inner pipe (4) and the outer pipe (3), and, at its downstream end (6), the exhaust gas pipe (1) has a tulip-shaped flared region formed by the outer pipe (3), which can be joined to another conveying component by means of the flanged ring (17) clamping the outer pipe (3).

2. Exhaust gas pipe as claimed in claim 1,
**characterised in that**
at its downstream end (6), the exhaust gas pipe (1) has a reinforcing collar (17) disposed outside the outer pipe (3) or between inner pipe (4) and outer pipe (3) and forms a tulip-shaped flared region (14) in conjunction with the outer pipe (3) which can be joined to another conveying component by means of a flanged ring (17) clamping the reinforcing collar (7) and the outer pipe (3).

3. Exhaust gas pipe as claimed in claim 1,
**characterised in that**.
the outer pipe (3) is provided with folds (20) of differing strength in a region designed to serve as a compensator (19).

## Revendications

1. Tube (1) pour gaz d'échappement, réalisé sous forme d'un tube à double paroi et isolé par un intervalle d'air, comportant un tube extérieur d'une seule pièce (3) et un tube intérieur (4) qui s'étend à distance du tube extérieur, ledit tube (1) d'échappement comportant à son extrémité amont (8) vis-à-vis du sens de l'écoulement et à son extrémité aval (6) vis-à-vis du sens de l'écoulement des tubulures (9, 10) sur lesquelles s'applique le tube intérieur (4), lequel comporte au moins un compensateur (11) réalisé à l'extrémité aval (6) du tube d'échappement (1) par rapport au tube extérieur (3), dans lequel est prévue à son extrémité amont (8) une liaison sans jeu entre le tube intérieur (4) et le tube extérieur (3), et dans lequel est intégré au moins un autre compensateur (19) dans le parcours du tube extérieur (3),
**caractérisé en ce que** le tube d'échappement (1) comporte à son extrémité amont (8) un élargissement (15) en forme de tulipe réalisé par le tube extérieur (3) et par le tube intérieur (4), qu'il est possible de relier à un composant successif au moyen d'une bride annulaire (17) qui pince le tube intérieur (4) et le tube extérieur (3), et **en ce que** le tube d'échappement (1) comporte à son extrémité aval (6) un élargissement en forme de tulipe réalisé par le tube extérieur (3), qu'il est possible de relier à un composant successif au moyen d'une bride annulaire (17) qui pince le tube extérieur (3).

2. Tube d'échappement selon la revendication 1, **caractérisé en ce que** le tube d'échappement (1) comporte à son extrémité aval (6) une douille de renfort (7), agencée à l'extérieur du tube extérieur (3) ou bien entre le tube intérieur (4) et le tube extérieur (3) et réalisant conjointement avec le tube extérieur (3) un élargissement (14) en forme de tulipe qu'il est possible de relier à un composant successif au moyen d'une bride annulaire (17) qui pince la douille de renfort (7) et le tube extérieur (3).

3. Tube d'échappement selon la revendication 1, **caractérisé en ce que** le tube extérieur (3) est pourvu, dans une région réalisée à titre de compensateur (19), de plis (20) de raideurs différentes.
